# EUROPÄISCHE PATENTSCHRIFT

(11) **EP 0 427 163 B1**
(45) Veröffentlichungstag und Bekanntmachung des Hinweises auf die Patenterteilung: **16.02.1994**
(21) Anmeldenummer: 90121103.7
(22) Anmeldetag: 03.11.1990
(51) Int. Cl.: B65H 43/00, B65H 7/00, H01L 41/08, H01L 41/04

(54) **Verfahren und Vorrichtung für den linearen Transport bahn- und blattförmiger Materialien**
Method and device for linear movement of web and sheet material
Procédé et dispositif pour le transport linéaire de matériaux en bande et en feuille

(30) Priorität: 07.11.1989 DE 3937020
(43) Veröffentlichungstag der Anmeldung: 15.05.1991
(73) Patentinhaber: DU PONT DE NEMOURS (DEUTSCHLAND) GMBH, 61352 Bad Homburg (DE); E.I. DU PONT DE NEMOURS AND COMPANY, Wilmington Delaware 19898 (US)
(72) Erfinder: Fischer, Gerhard, Dr., W-6057 Dietzenbach (DE); Herden, Andreas, Dr., W-6100 Darmstadt (DE)
(74) Vertreter: Pistor, Wolfgang, Dipl.-Chem.

(56) Entgegenhaltungen:
- DE-A- 3 516 324
- US-A- 3 454 206

## Beschreibung

Die Erfindung betrifft ein Verfahren und eine Vorrichtung zum Transportieren von bahn- und blattförmigen Materialien, insbesondere für den linearen Transport von Aufzeichungsmaterialien in einer Bildaufzeichnungsvorrichtung und von bildtragenden Materialien in einer Abtastvorrichtung.

Bei der elektronischen Bildverarbeitung werden Eingabe- und Ausgabeverfahren angewendet, bei denen entweder vorhandene Bilder mit einer Abtasteinrichtung zeilenweise abgetastet oder die als elektrisches Signal vorhandenen Bildinformationen mit einer geeignet angesteuerten Schreibvorrichtung in Form eines Bildes aufgezeichnet werden. Hierzu werden bahn- oder blattförmige Materialien, z.B. photographische Filme, Papiere oder Folien, die entweder Bilder tragen oder auf denen Bilder aufgezeichnet werden sollen, an einer geeignet angesteuerten Schreibvorrichtung, z.B. einem Laser, einem Thermo- oder einem Tintenstrahldruckkopf bzw. an einer Abtastvorrichtung vorbeibewegt. Diese Bewegung muß möglichst gleichmäßig und reproduzierbar sein, um Verzerrungen der Aufzeichnung zu vermeiden. Dies ist besonders wichtig, wenn für eine mehrfarbige Aufzeichnung mehrere einfarbige Teilbilder nacheinander auf die gleiche Fläche des Materials aufgezeichnet werden sollen.

Übliche Scanner transportieren das Material mit Hilfe von Walzen. Um eine ausreichende Reibungskraft auf das Material übertragen zu können und eine kontinuierlich gleichförmige Bewegung zu erreichen, werden diese Transportwalzen möglichst groß ausgelegt. Andererseits strebt man eine kompakte Bauweise der Geräte an, wodurch die Möglichkeit, große Walzen zu verwenden, eingeschränkt ist. Die Genauigkeit des Transports muß so hoch sein, daß der Fehler über die gesamte Länge eines Bildes nicht größer als ein Bruchteil des Zeilenabstandes, in der Praxis also 20 bis 40 µm, ist. Dies erfordert eine hohe mechanische Präzision und bedingt einen erheblichen Aufwand bei der Fertigung. Es ist auch schwierig, derartige Transportvorrichtungen an die Eigenschaften der verschiedenen Materialien, beispielsweise die Dicke oder die Rauhigkeit, anzupassen, ohne daß die Präzision verlorengeht.

In der US-A-34 54 206, die dem Oberbegriff der Ansprüche 1 und 7 entspricht, wird eine Transportvorrichtung für einen Film beschrieben, bei der in einem Rahmen drei Piezotranslatoren (Bauelemente, die beim Anlegen einer elektrischen Spannung ihre Länge ändern) angeordnet sind. Durch zwei dieser Translatoren, die mit jeweils geeigneten Widerlagern je eine Klemmvorrichtung bilden, wird der Film abwechselnd eingeklemmt, während der dritte die Klemmvorrichtungen im gleichen Wechselrhythmus periodisch aufeinander zu und voneinander weg bewegt. Hierdurch wird der Film schrittweise transportiert.

Die DE-A-35 16 324 gibt einen Linearmotor an, der die gleichen Elemente, jedoch in kinematischer Umkehrung enthält. Dabei trägt der Läufer an beiden Enden je eine Gruppe von Piezotranslatoren und klemmt sich abwechselnd mit je einem Ende in einem Stator fest, während eine dritte Gruppe von Translatoren die Länge des Läufers periodisch verändert.

Schrittweise arbeitende Verfahren sind grundsätzlich für den Materialtransport beim zeilenweisen Aufzeichnen oder Abtasten von Bildern besser geeignet als Verfahren mit gleichförmig bewegtem Material. Man kann nämlich hierbei leicht erreichen, daß das bahnförmige Material während des Überstreichens einer Zeile in Ruhe ist und die Verschiebung nur in den Pausen zwischen den einzelnen Zeilen, z. B. bei der Aufzeichnung während des Strahlrücklaufs, stattfindet. So vermeidet man die bei gleichförmiger Bewegung auftretenden Verzerrungen, durch die statt kreisförmiger oder quadratischer Rasterpunkte solche von elliptischer bzw. rhombischer Form gebildet werden. Da die Masse und damit die Trägheit der bewegten Teile gering ist, erscheinen Verfahren und Vorrichtungen nach dem geschilderten Stand der Technik besonders brauchbar. Im Gegensatz dazu erfordert das hohe Trägheitsmoment von großen Transportwalzen für einen schrittweisen Betrieb hohe Kräfte.

Ein Mangel der bekannten Transporteinrichtungen besteht jedoch darin, daß die Auslenkung der Translatoren last- und temperaturabhängig ist und einer starken Hysterese unterliegt. Diese Hysterese kann bis zu 10 % des Transportweges betragen. Daher wirken sich beispielsweise die Massenträgheit bzw. das Flächengewicht des zu transportierenden Materials sowie auch eine Änderung der Temperatur während des Betriebs störend auf die Konstanz der Transportgeschwindigkeit aus. Auch die Schrittfrequenz und die Amplituden der Steuerspannungen beeinflussen die effektive Transportgeschwindigkeit und müssen genau geregelt werden.

Aufgabe der Erfindung ist es, ein Verfahren zum schrittweisen linearen Transportieren bahn- und blattförmiger Materialien beim zeilenweisen Aufzeichnen oder Abtasten von Bildern anzugeben, bei dem die Schrittlänge von störenden Einflußgrößen nicht merklich verändert wird.

Eine weitere Aufgabe besteht darin, ein Verfahren anzugeben, bei dem eine sehr gleichmäßige und reproduzierbare mittlere Transportgeschwindigkeit erzielt wird, ohne daß bestimmte Werte für die Schrittfrequenz und die Amplitude der Steuerspannung genau eingehalten werden müssen.

Eine dritte Aufgabe ist die Bereitstellung einer Vorrichtung, mit der ein erfindungsgemäßes Verfahren ausgeführt werden kann.

Die Lösung dieser Aufgaben besteht in einem Verfahren nach dem Anspruch 1 und in einer Vorrichtung nach dem Anspruch 7.

Diese Aufgabe wird gelöst durch ein Verfahren zum schrittweisen Transportieren eines blatt- oder bahnförmigen Materials durch eine Bildaufzeichnungs- oder -abtastvorrichtung, bei dem das Material abwechselnd von zwei Klemmvorrichtungen mit je einer Gruppe aus einem oder mehreren Piezotranslatoren ergriffen wird und diese Klemmvorrichtungen durch eine dritte Gruppe Piezotranslatoren im gleichen Wechselrhythmus aufeinander zu und voneinander weg bewegt werden, welches dadurch gekennzeichnet ist, daß die Änderung des Abstands der Klemmvorrichtungen relativ zueinander bei jedem Transportschritt durch eine Interferometeranordnung, bestehend aus einem optischen Interferometer, einer monochromatischen kohärenten Lichtquelle und einem photoelektrischen Detektor, kontinuierlich gemessen und die Transportbewegung beendet wird, wenn eine vorgegebene Schrittlänge erreicht worden ist.

Zur Lösung der Aufgabe dient auch eine Transportvorrichtung für blatt- oder bahnförmiges Material mit einem Rahmen, in dem zwei Klemmvorrichtungen mit je einer Gruppe aus einem oder mehreren Piezotranslatoren angebracht sind, wobei die Klemmvorrichtungen über eine dritte Gruppe von Piezotranslatoren, die deren Abstand voneinander bestimmen, miteinander verbunden sind, die dadurch gekennzeichnet ist, daß sie eine Interferometeranordnung, bestehend aus einem optischen Interferometer, einer monochromatischen kohärenten Lichtquelle und einem photoelektrischen Detektor, aufweist, welche so angeordnet ist, daß ihr Ausgangssignal eine eindeutige Funktion des Abstands der Klemmvorrichtungen voneinander ist.

Die beigefügten Zeichnungen erklären beispielhaft Aufbau und Wirkungsweise einer solchen Vorrichtung. Es zeigen
Fig. 1 einen Längsschnitt durch eine erfindungsgemäße Transportvorrichtung,
Fig. 2 ein Blockdiagramm der verwendeten elektrischen und elektronischen Hilfsmittel,
Fig. 3 den zeitlichen Verlauf der an den Piezotranslatoren anliegenden Spannungen während eines Transportschritts.

Unter Transportschritt soll hierbei derjenige Teilvorgang verstanden werden, bei dem durch die Längenänderung der Piezotranslatoren der dritten Gruppe diejenige Klemmvorrichtung, die das Material festhält, gegenüber dem Rahmen bewegt wird, sodaß auch das Material relativ zum Rahmen transportiert wird. Je nachdem ob diese Längenänderung eine Dilatation oder Kontraktion ist, kann also ein Transport in beiden Richtungen stattfinden.

Wie bereits ausgeführt, findet jeder Transportschritt bevorzugt in den Pausen zwischen den Zeilen des Aufzeichnungs- bzw. Abtastvorgangs statt. Es ist dann notwendig, Transportschritte und Zeilenrückläufe zu synchronisieren. Daher wird das für die Auslösung des Transportschritts benötigte Steuersignal am einfachsten von einem periodischen Signal abgeleitet, welches auch das Zeilensignal der Aufzeichnungs- bzw. Abtastvorrichtung steuert. Die Länge jedes Transportschritts wird jedoch unabhängig von diesem Signal mit Hilfe der Interferometeranordnung nach einem vorgegebenen konstanten oder zeitlich veränderlichen Sollwert gesteuert. Bei einer bevorzugten Ausgestaltung des Verfahrens werden die Signale für die Auslösung des Transportschritts, für die Betätigung der Klemmvorrichtungen und für den Zeilenrücklauf von einem gemeinsamen Grundsignal für die punktweise Bildaufzeichnung bzw. -abtastung abgeleitet. Dies kann beispielsweise durch Zählerschalter geschehen.

Das Ausgangssignal der Interferometeranordnung nimmt im allgemeinen im Zeitraum eines Transportschrittes, der durch die Dilatation bzw. Kontraktion der dritten Gruppe von Piezotranslatoren bewirkt wird, eine Reihe von Extremwerten (Minima bzw. Maxima) an. Je nach Art des verwendeten Interferometers tritt ein Extremwert auf, wenn die bewegliche Klemmvorrichtung um eine Wegstrecke verschoben wurde, die gleich einem bestimmten Bruchteil der Wellenlänge λ des Meßlichtes ist. In einer bevorzugten Ausführung wird eine Interferometeranordnung mit einem Michelson-Interferometer und einem photoelektrischen Detektor verwendet. In diesem Fall wird nach jeder Verschiebung um λ/4 ein Extremwert des elektrischen Ausgangssignals beobachtet. Ebenso oft geht das Signal durch den Mittelwert oder auch durch einen Wendepunkt, der im Fall eines sinusförmigen Signals, d.h. bei linearer Detektorcharakteristik beim Signalmittelwert liegt. Nach dem erfindungsgemäßen Verfahren wird nun die Dilatation bzw. Kontraktion der dritten Gruppe von Piezotranslatoren unterbrochen, indem der Anstieg der Betätigungsspannung für diese Translatoren unterbrochen wird, wenn das Ausgangssignal der Interferometeranordnung durch eine bestimmte vorgegebene Anzahl von Extremwerten bzw. Wendepunkten, gezählt vom Beginn des Transportschritts, durchgegangen ist. Hierzu kann eine geeignete Zählschaltung verwendet werden.

In einer bevorzugten Ausführungsform wird das Detektorausgangssignal über eine Impulsformerschaltung geleitet, die bei jedem Extremwert oder bei jedem Durchgang durch den Mittelwert (Wendepunkt) einen Nadelimpuls abgibt. Dies kann beispielsweise eine Schmitt-Trigger-Schaltung mit einem Differenzierungsglied sein.

Im allgemeinen wird man eine über die ganze Bildlänge konstante mittlere Transportgeschwindigkeit anstreben, so daß der Sollwert für die Anzahl der zu zählenden Extremwerte zeitlich konstant gehalten wird. Es ist jedoch ohne weiteres möglich, diesen Sollwert auch zeitlich zu verändern, wenn etwa verschiedene Bildteile mit unterschiedlicher Zeilendichte, d.h. unterschiedlichen Schrittlänge, bearbeitet werden sollen.

Die Genauigkeit des Verfahrens genügt den praktischen Anforderungen. Es sei beispielsweise λ = 800 nm, die Größe der gesamten Aufzeichnung entspreche DIN A 4 (Länge etwa 30 cm) und die Aufzeichnung geschehe mit 1000 Zeilen je cm. Es ist ohne Schwierigkeit möglich, die Lage des Extremwerts bzw. Wendepunkts, bei dem der einzelne Transportschritt abgebrochen werden soll, bei jedem einzelnen Schritt mit einer Genauigkeit zu erfassen, die einem Zehntel des Abstandes der Extremwerte entspricht. Dann ist der größtmögliche Fehler bei einem einzelnen Transportschritt 20 nm, wenn das erwähnte Michelson-Interferometer benutzt wird. Die Standardabweichung über die Gesamtlänge (30 000 Transportschritte) liegt in diesem Fall einer relativ feinen Aufzeichung bei 3,4 µm, d.h. bei einem Drittel des Zeilenabstands.

Die Länge des einzelnen Transportschritts bzw. Zeilenabstandes beim erfindungsgemäßen Verfahren läßt sich auf eine Reihe diskreter Werte einstellen. Da der Abstand dieser Werte auf höchstens λ/4, nach dem obigen Beispiel also 200 nm, begrenzt werden kann, bedeutet dies in der Praxis bei Zeilenabständen in der Größenordnung von 100 µm keine Einschränkung. Wenn ausnahmsweise ein mittlerer Zeilenabstand gewünscht wird, der zwischen zwei möglichen diskreten Werten liegt, dann kann man diesen realisieren, indem man die zwei möglichen diskreten Abstände in geeigneter Folge sich abwechseln läßt. Es läßt sich auch eine quasikontinuierliche Veränderung des Zeilenabstandes verwirklichen, die, da sie digital kontrolliert wird, sehr reproduzierbar durchgeführt werden kann.

Eine Vorrichtung zur Ausführung des erfindungsgemäßen Verfahrens besteht aus einem Rahmen (Stator, Gehäuse), in welchem zwei durch je eine Gruppe von Piezotranslatoren betätigte Klemmvorrichtungen sowie eine dritte Gruppe von Piezotranslatoren, die den Abstand der beiden Klemmvorrichtungen verändern können, angeordnet sind. Außerdem ist eine Interferometeranordnung vorhanden, welche aus einem optischen Interferometer, einer monochromatischen kohärenten Lichtquelle und einem photoelektrischen Detektor, der ein Ausgangssignal erzeugt, besteht und so angeordnet ist, daß das Ausgangssignal eine eindeutige Funktion des Abstandes der beiden Klemmvorrichtungen ist. Des weiteren gehören zu einer geeigneten Vorrichtung noch elektrische und elektronische Hilfsmittel zur Aktivierung und Steuerung der Piezotranslatoren.

Die Klemmvorrichtungen können nach dem Vorbild der US-A-34 54 206 aus je einem Piezotranslator und einem Widerlager bestehen, wobei beide Translatoren am Rahmen befestigt sind und der dritte Translator den Abstand der Widerlager periodisch verändert. Bei dieser Ausführungsform kommt es jedoch zu einer elastischen Verbiegung wenigstens eines Translators. Die dafür erforderliche Kraft wird in Längsrichtung über den Film reibschlüssig übertragen, wobei der Transport infolge Durchrutschens unvollständig sein kann und Kratzer auf dem Film entstehen können. Bevorzugt wird daher eine Konstruktion, bei der beide Komponenten der zweiten Klemmvorrichtung nicht direkt sondern über die Piezotranslatoren der dritten Gruppe am Rahmen befestigt sind. Dadurch kann sich die zweite Klemmvorrichtung als Ganzes gegenüber dem Rahmen bewegen und auf den Film braucht nur die für die Überwindung von dessen Trägheit erforderliche geringe Kraft übertragen zu werden.

Die Interferometeranordnung besteht bevorzugt aus einem Michelson-Interferometer, einer Laserdiode als monochromatische kohärente Lichtquelle und einem photoelektrischen Detektor, beispielsweise einer Photodiode. Wenn die Endspiegel des Interferometers auf den beiden Klemmvorrichtungen befestigt sind, wird deren Abstandsänderung direkt gemessen. Hierzu ist das Interferometer um einen Umlenkspiegel zu erweitern. In einer bevorzugten Ausführungsform sind die erste Klemmvorrichtung sowie alle Komponenten der Interferometeranordnung mit Ausnahme eines an der zweiten Klemmvorrichtung fixierten Interferometer-Endspiegels am Rahmen befestigt. In dieser Anordnung mißt das Interferometer die Bewegung der zweiten Klemmvorrichtung relativ zum Rahmen, somit indirekt auch deren Abstand von der ersten Klemmvorrichtung.

Wenn das zu transportierende Material eine größere Breite hat, kann es zweckmäßig sein, die Klemmvorrichtungen und die diese verbindenden Piezotranslatoren der dritten Gruppe mehrfach über die Breite verteilt anzuordnen, beispielsweise zweifach an den beiden Rändern des Materials.

Die Piezotranslatoren der dritten Gruppe, welche gegenüberliegende Teile der Klemmvorrichtungen verbinden, müssen hinsichtlich ihrer elektrischen und mechanischen Eigenschaften möglichst gleich sein, wenn nur eine Interferometervorrichtung verwendet wird, damit das aus der Messung an einem Translator gewonnene Steuersignal in allen Translatoren der dritten Gruppe die gleiche Bewegung hervorruft. Der Aufwand für die Beschaffung solcher zueinander passender Translatoren kann beträchtlich sein. Daher ist alternativ auch möglich, daß jeder Piezotranslator der dritten Gruppe von einer eigenen Interferometeranordnung gemessen und gesteuert wird. Dies kann bei Verwendung preisgünstiger Interferometer und Steuergeräte wirtschaftlicher sein.

Für jede Gruppe von Piezotranslatoren ist ein Steuergerät vorhanden, das auf ein externes Signal hin die an den Translatoren anliegende Spannung mit einer bestimmbaren Rampensteilheit auf einen Maximal- bzw. Minimalwert ein- bzw. ausschaltet. Das Steuergerät für die dritte Gruppe von Piezotranslatoren muß außerdem den Spannungsanstieg auf der Rampe vor Erreichen des Maximalwertes auf ein externes Signal hin anhalten können. Dieses Steuergerät muß selbstverständlich mehrfach vorhanden sein, wenn die Piezotranslatoren der dritten Gruppe von mehreren Interferometeranordnungen gesteuert werden.

Als Mittel für die Erzeugung der Ein- und Ausschaltsignale für die Steuergeräte kann beispielsweise ein Zählerschalter dienen, der von dem gleichen Hochfrequenzsignal Gebrauch macht, das auch die Impulsfolge für die Aufzeichung bzw. Abtastung und mittelbar für die Zeilenablenkung bestimmt. Ein zweiter Zählerschalter nimmt das Interferometerdetektor-Ausgangssignal auf und veranlaßt nach einer vorgewählten Anzahl von Extremwerten, daß die Spannung am Ausgang des Steuergeräts für die dritte Gruppe Piezotranslatoren nicht weiter ansteigt.

Geeignete Piezotranslatoren für den Aufbau einer erfindungsgemäßen Vorrichtung sind handelsüblich. Auch für die wesentliche Baugruppe der Interferometeranordnung sind preisgünstige Ausführungsformen erhältlich, die beispielsweise für den Einsatz in CD-Abspielgeräten vorgesehen sind.

Die erfindungsgemäße Transportvorrichtung läßt sich leicht an verschiedene Dicken des zu transportierenden Materials anpassen. Verwendet man beispielsweise für die Klemmvorrichtungen handelsübliche Translatoren mit einem Stellweg von 100 µm, dann lassen sich Materialien mit Dicken im Bereich von mindestens 150 µm, also etwa von 50 bis 200 µm, ohne mechanische Verstellung der Vorrichtung verarbeiten. Die Piezotranslatoren besitzen eine endliche Steifigkeit, d.h. sie üben einen endlichen Druck aus, wenn sie die der Betätigungsspannung entsprechende Längenänderung nicht voll realisieren können. Durch die Einstellung der maximalen Betätigungsspannung läßt sich daher auch der Druck der Klemmvorrichtung auf das Material leicht beeinflussen, sodaß einerseits ein sicher Transport gewährleistet, andererseits eine Beschädigung des Materials durch zu hohen Druck vermieden wird.

Durch einfaches Ändern der Schaltfolge kann man die Transportrichtung des Materials umkehren, wenn dieses hinreichend steif ist. Davon kann bei Mehrfachaufzeichnungen, z.B. mehrfarbigen Bildern, Gebrauch gemacht werden. Man kann entweder sowohl beim Vorwärts- als auch beim Rückwärtslauf aufzeichnen oder auch nach jedem Vorwärtslauf einen schnellen Rücklauf ohne Aufzeichnung einschieben. Mit Transportwalzen ist eine solches Vorgehen wegen des toten Gangs in den mechanischen Antrieben nur unter Schwierigkeiten möglich.

Ebenfalls durch rein elektrische Umschaltungen kann die mittlere Transportgeschwindigkeit geändert werden, wenn etwa wegen geringerer Lichtempfindlichkeit des Aufzeichnungsmaterials und begrenzter Intensität des Aufzeichnungslichts die Aufzeichnung langsamer durchgeführt werden muß. Dies kann z.B. durch Umprogrammieren des Zählerschalters, der die Steuersignale für den Transport und den Zeilenrücklauf aus der Grundfrequenz ableitet, erfolgen.

Das Verfahren und die Vorrichtung nach der Erfindung werden anhand des folgenden Ausführungsbeispiels erläutert. Zur Vereinfachung wird die Funktion in einer Bildaufzeichnungsvorrichtung dargestellt. Die Erfindung läßt sich jedoch in völlig äquivalenter Weise auch in Bildabtastvorrichtungen anwenden.

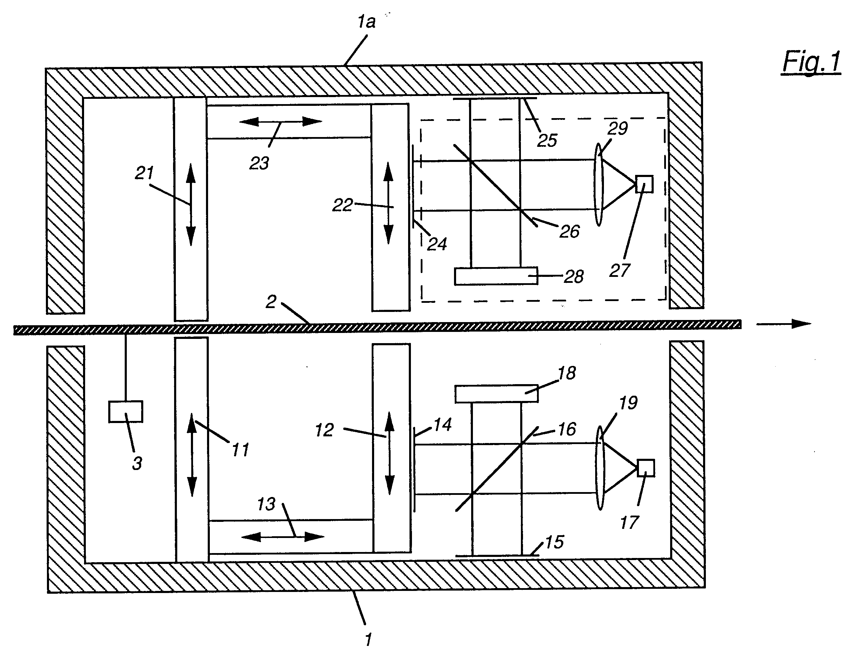

Fig. 1 zeigt einen Längsschnitt durch eine erfindungsgemäße Transportvorrichtung für das bahn- oder blattförmige Material (2), welches relativ zu einem festen, aus Oberteil (1a) und Unterteil (1) bestehenden Rahmen schrittweise an einer Bildaufzeichungsvorrichtung (3), beispielsweise einem Laser mit einer senkrecht zur Papierebene wirkenden Ablenkvorrichtung, vorbeibewegt wird. Eine erste, mit dem Rahmen (1), (1a) fest verbundene Klemmvorrichtung besteht aus zwei Piezotranslatoren (11) und (21), deren Ausdehnungsrichtung senkrecht zum Material (2) verläuft und die, wenn sie durch Anlegen einer ausreichenden elektrischen Spannung betätigt werden, das Material einklemmen. Eine zweite Klemmvorrichtung besteht aus den Piezotranslatoren (12) und (22), deren Ausdehnungsrichtung ebenfalls senkrecht zum Material (2) gerichtet ist. Diese sind jedoch gegenüber dem Rahmen (1), (1a) beweglich über die Piezotranslatoren (13) bzw. (23) mit den am Rahmen fixierten Enden der Piezotranslatoren (11) bzw. (21) verbunden. Die Piezotranslatoren (13) und (23) sind so angeordnet, daß sie den Abstand zwischen den beiden Klemmvorrichtungen, d.h. zwischen (11) und (12) bzw. (21) und (22) vergrößern, wenn sie durch Anlegen einer Spannung betätigt werden. Die Bewegungen der Piezotranslatoren sind durch Doppelpfeile angedeutet. Ein Spiegel (14) ist mit der zweiten Klemmvorrichtung, hier mit dem Piezotranslator (12), fest verbunden. Ein weiterer Spiegel (15), ein halbdurchlässiger Spiegel (16) und ein photoelektrischer Detektor (18) sind so auf dem Rahmen (1) befestigt, daß sie mit einer Quelle für kohärentes monochromatisches paralleles Licht (Meßlicht), beispielsweise einer Laserdiode (17) mit einer Aufweitungsoptik (19), ein Michelson-Interferometer bilden. Gegebenenfalls kann eine zweite Interferometeranordnung, bestehend aus dem auf dem Piezotranslator (22) fixierten Spiegel (24) sowie aus dem Spiegel (25), dem halbdurchlässigen Spiegel (26), der Lichtquelle (27), (29) und dem Detektor (28), die sämtlich auf dem Rahmen-Oberteil (1a) befestigt sind, vorhanden sein.

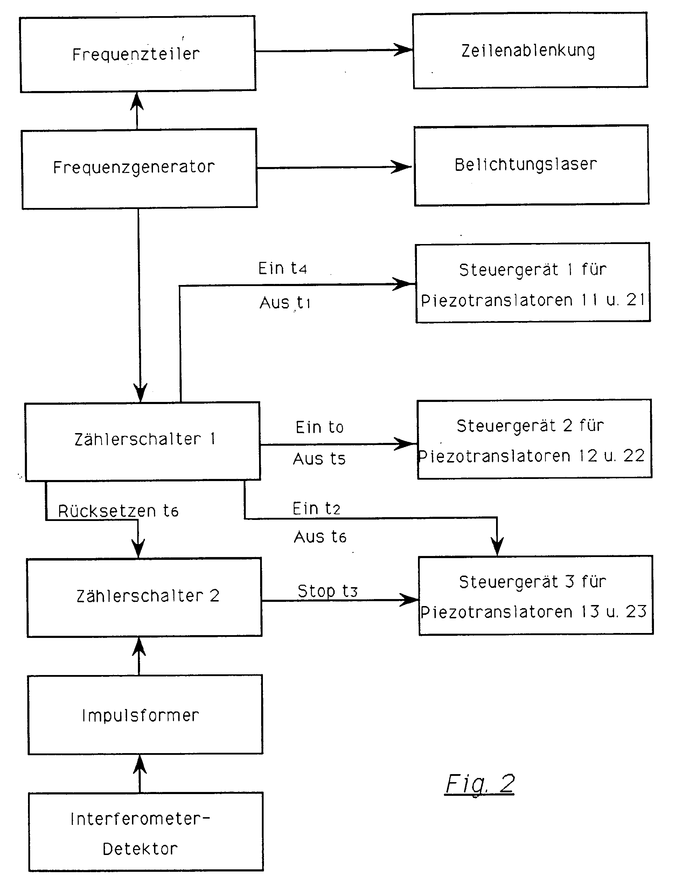

Ein Blockdiagramm der elektrischen und elektronischen Hilfsmittel zeigt Fig. 2. Ein Frequenzgenerator erzeugt eine Frequenz von beispielsweise 10 MHz und steuert den Belichtungslaser, der mit der gleichen Frequenz Lichtblitze aussendet, welche gemäß der gespeicherten und aufzuzeichnenden Bildinformation moduliert sind. Ein Frequenzteiler sorgt dafür, daß nach einer bestimmten Anzahl von Laserblitzen der Vorgang der Zeilenablenkung von vorn beginnt und eine neue Zeile aus dem Bildinformationsspeicher abgerufen wird. Dabei wird auch für den Zeilenrücklauf eine angemessene Pause vorgesehen. Wenn beispielsweise bei einer Aufzeichungsbreite von etwa 30 cm und einer Dichte von 100 Punkten je cm in jeder Zeile 3 x 2¹⁰ = 3072 Punkte aufgezeichnet werden, dann kann während der folgenden 2¹⁰ = 1024 Impulse vom Frequenzgenerator der Zeilenrücklauf erfolgen, sodaß etwa 250 Zeilen je s geschrieben werden können. Die gleiche Grundfrequenz, die den Belichtungslaser und den Zeilenvorschub steuert, kann nun auch zur Steuerung des Transportsystems dienen. Hierzu ist ein Zählerschalter 1 vorgesehen, der innerhalb eines Zeitintervalles, das 2¹² = 4096 Perioden der Grundfrequenz entspricht, jedem der drei Steuergeräte für die drei Gruppen von Piezotranslatoren zu vorbestimmten Zeitpunkten je ein Ein- und ein Ausschaltsignal liefert. Diese Zeiten sind mit t₀, t₁, t₂, t₄, t₅ und t₆ bezeichnet. Ein Zählerschalter 2 wird durch das Einschaltsignal für das Steuergerät 3 zurückgesetzt und erhält ein Signal vom Interferometerdetektor. Wenn der Zählerschalter 2 eine bestimmte vorwählbare Anzahl von Impulsen des Detektorsignals gezählt hat, gibt er ein Stop-Signal an das Steuergerät 3.

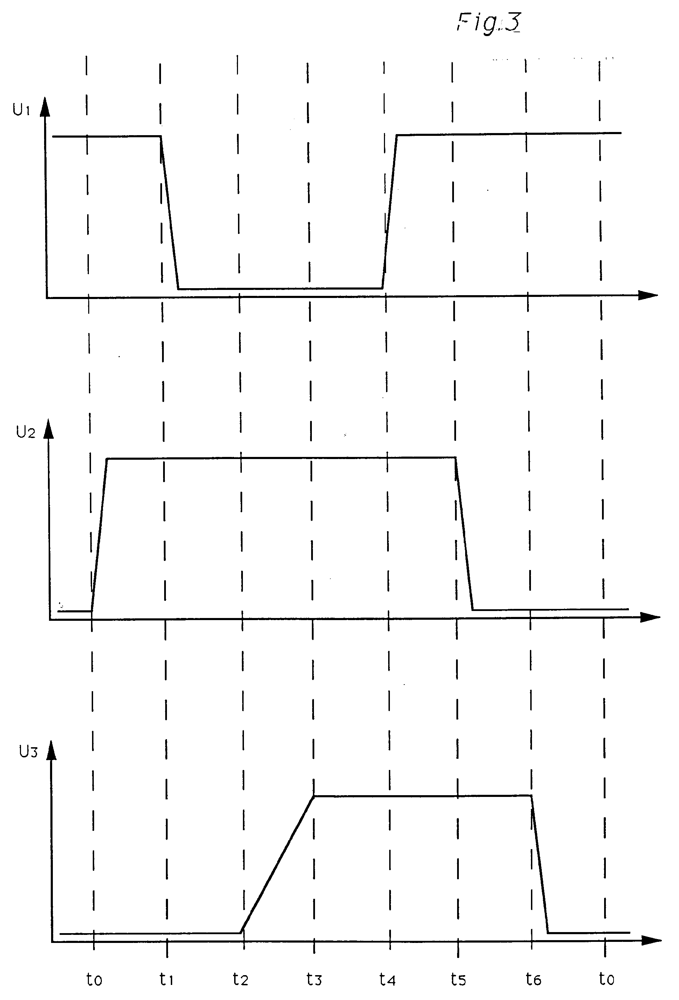

Den Ablauf eines Transportschritts erkennt man noch deutlicher aus der Fig. 3, in der zeitliche Verlauf der an den Piezotranslatoren anliegenden, von den Steuergeräten gelieferten Spannungen aufgetragen ist. (Die Achsen dieses Diagramms sind nicht maßstäblich.) Zum Zeitpunkt t₀ liefert das Steuergerät 1 die Maximalspannung; infolgedessen ist die erste Klemmvorrichtung mit den Piezotranslatoren (11) und (21) geschlossen. Die Translatoren (13) und (23) der dritten Gruppe erhalten vom Steuergerät 3 die minimale Spannung und haben demnach ihre minimale Länge. Das Steuergerät 2 erhält vom Zählerschalter 1 ein Einschaltsignal, wodurch sich die zweite Klemmvorrichtung aus den Translatoren (12) und (22) schließt. Zum Zeitpunkt t₁ erhält das Steuergerät 1 ein Ausschaltsignal und die erste Klemmvorrichtung öffnet sich. Bei t₂ bekommt das Steuergerät 3 einen Einschaltimpuls. Dadurch beginnt die an den Translatoren (13) und (23) anliegende Spannung U₃ zu steigen, diese werden gestreckt und bewegen die zweite Klemmvorrichtung, die das Material festhält, in der Transportrichtung. Durch die Bewegung des mit der zweiten Klemmvorrichtung verbundenen Spiegels (14) laufen nun Interferenzstreifen über den Photodetektor (18), der ein entsprechendes Signal über einen Impulsformer an den Zählerschalter 2 liefert. Der Impulsformer liefert einen Nadelimpuls bei jedem Extremwert oder bei jedem Wendepunkt des Detektorsignals. Nach einer bestimmten vorgegebenen Impulszahl, zum Zeitpunkt t₃, gibt der Zählerschalter 2 ein Stopsignal an das Steuergerät 3 und die Spannung U₃ steigt nicht weiter an. Es ist zweckmäßig, die Spannung U₃ die den eigentlichen Transport bewirkt, langsamer steigen zu lassen als die Spannungen U₁ und U₂, die lediglich das Schließen der Klemmvorrichtungen hervorrufen, um die durch die Trägheit des Materials bedingten Kräfte zu begrenzen. Andererseits muß natürlich zumindest das Zeitintervall t₂ - t₃ vollständig während des Zeilenrücklaufs ablaufen. Durch die Dilatation der Piezotranslatoren (13) und (23) wird die zweite Klemmvorrichtung (12), (22), die das Material zu dieser Zeit festhält, in der Transportrichtung bewegt und nimmt das Material um die mittels der am Zählerschalter 2 vorgewählten Impulszahl entsprechenden Schrittlänge mit. Zum Zeitpunkt t₄ gibt der Zählerschalter 1 ein Einschaltsignal an das Steuergerät 1 und die erste Klemmvorrichtung (11), (21) schließt sich. Nun befindet sich das Material gegenüber dem Rahmen wieder in Ruhe und es kann eine Zeile aufgezeichnet werden. Während oder nach dieser Aufzeichnung wird die zweite Klemmvorrichtung (12), (22) durch einen Ausschaltimpuls an das Steuergerät 2 geöffnet (Zeitpunkt t₅). Danach, bei t₆, erhält auch das Steuergerät 3 einen Ausschaltimpuls, die Spannung U₃ geht auf den Minimalwert zurück und die Piezotranslatoren (13) und (23) kontrahieren auf minimale Länge. Gleichzeitig wird durch einen Impuls vom Zählerschalter 1 der Zählerschalter 2 zurückgesetzt. Damit ist ein Transportschritt beendet und die Vorrichtung wieder im gleichen Zustand wie zur Zeit t₀.

## Patentansprüche

1. Verfahren zum schrittweisen Transportieren eines blatt- oder bahnförmigen Materials durch eine Bildaufzeichnungs- oder -abtastvorrichtung, bei dem das Material abwechselnd von zwei Klemmvorrichtungen mit je einer Gruppe aus einem oder mehreren Piezotranslatoren ergriffen wird und diese Klemmvorrichtungen durch eine dritte Gruppe Piezotranslatoren im gleichen Wechselrhythmus aufeinander zu und voneinander weg bewegt werden,
dadurch gekennzeichnet, daß
die Änderung des Abstands der Klemmvorrichtungen relativ zueinander bei jedem Transportschritt durch eine Interferometeranordnung, bestehend aus
- einem optischen Interferometer,
- einer monochromatischen kohärenten Lichtquelle und
- einem photoelektrischen Detektor,
kontinuierlich gemessen und die Transportbewegung beendet wird, wenn eine vorgegebene Schrittlänge erreicht worden ist.

2. Verfahren nach Anspruch 1,
dadurch gekennzeichnet, daß
als optisches Interferometer ein Michelson-Interferometer verwendet wird.

3. Verfahren nach Anspruch 2,
dadurch gekennzeichnet, daß
das Detektorausgangssignal über einen Impulsformer geleitet wird, welcher an den Extremwerten oder an den Wendepunkten des Signals Nadelimpulse abgibt.

4. Verfahren nach Anspruch 2 oder 3,
dadurch gekennzeichnet, daß
der Anstieg der Betätigungsspannung für die Piezotranslatoren der dritten Gruppe, durch welche die beiden Klemmvorrichtungen während des Transportschritts voneinander weg bzw. aufeinander zu bewegt werden, abgebrochen wird, wenn das Ausgangssignal des Detektors eine vorgegebene Anzahl von Extrema bzw. Wendepunkten, gezählt vom Beginn der Bewegung, durchlaufen hat.

5. Verfahren nach einem der Ansprüche 1 bis 4,
dadurch gekennzeichnet, daß
die zeitliche Abfolge der Transportschritte mit dem Zeilenrücklauf der Bildabtast- oder -aufzeichungsvorrichtung synchronisiert ist.

6. Verfahren nach Anspruch 5,
dadurch gekennzeichnet, daß
die Signale für die Betätigung der Klemmvorrichtungen, für den Beginn des Transportschritts und für den Zeilenrücklauf aus einem gemeinsamen Grundsignal für die punktweise Bildaufzeichnung oder -abtastung abgeleitet werden.

7. Vorrichtung zur Ausführung des Verfahrens nach einem der Ansprüche 1 bis 6 mit einem Rahmen (1, 1a), in dem zwei Klemmvorrichtungen (11, 21; 12, 22) mit je einer Gruppe aus einem oder mehreren Piezotranslatoren angebracht sind, wobei die Klemmvorrichtungen über eine dritte Gruppe (13, 23) von Piezotranslatoren, die deren Abstand voneinander bestimmten, miteinander verbunden sind,
dadurch gekennzeichnet, daß
sie eine Interferometeranordnung, bestehend aus
- einem optischen Interferometer (14, 15, 16; 24, 25, 26),
- einer monochromatischen kohärenten Lichtquelle (17, 27) und
- einem photoelektrischen Detektor (18, 28),
aufweist, die so angeordnet ist, daß ihr Ausgangssignal eine eindeutige Funktion des Abstands der Klemmvorrichtungen voneinander ist.

8. Vorrichtung nach Anspruch 7,
dadurch gekennzeichnet, daß
eine Klemmvorrichtung (11, 21) fest mit dem Rahmen (1, 1a) verbunden ist, während die zweite (12, 22) durch die Piezotranslatoren (13, 23) der dritten Gruppe gegenüber dem Rahmen (1, 1a) bewegt werden kann.

9. Vorrichtung nach Anspruch 7 oder 8,
dadurch gekennzeichnet, daß
das optische Interferometer ein Michelson-Interferometer (14,15,16;24,25,26) ist.

10. Vorrichtung nach Anspruch 9,
dadurch gekennzeichnet, daß
ein Endspiegel (14, 24) des Michelson-Interferometers (14,15,16;24,25,26) auf der zweiten Klemmvorrichtung (12, 22) und der andere auf dem Rahmen (1, 1a) fest angebracht ist.

11. Vorrichtung nach einem der Ansprüche 7 bis 10,
dadurch gekennzeichnet, daß
für jeden Piezotranslator (13, 23) der dritten Gruppe eine Interferometeranordnung vorhanden ist.

12. Vorrichtung nach einem der Ansprüche 7 bis 11,
dadurch gekennzeichnet, daß
jede der beiden Klemmvorrichtungen (11, 21; 12, 22) in mehrfacher Ausführung über die Breite der Vorrichtung verteilt angeordnet ist.

13. Vorrichtung nach Anspruch 12,
dadurch gekennzeichnet, daß
jede der beiden Klemmvorrichtungen (11, 21; 12, 22) in zwei Ausführungen vorhanden ist, welche die Ränder des zu transportierenden Materials (2) fassen.

## Claims

1. A method for stepwise transport of a material in sheet or web form through an image recording or scanning device in which process the material is gripped alternately by two clamping devices, each with a group of one or more piezotranslators and these clamping devices are moved towards and away from one another in the same alternative rhythm by a third group of piezotranslators,
characterized in that
the change in the spacing of the clamping devices relative to one another is measured continuously by an interferometer arrangement consisting of
- an optical interferometer,
- a monochromatic coherent light source and
- a photoelectric detector,
and that the transport movement is ended when a predetermined step length is achieved.

2. Method according to claim 1,
characterized in that
a Michelson interferometer is used as an optical interferometer.

3. Method according to claim 2,
characterized in that
the detector output signal is passed through an impulse generator that generates spike impulses at the peak values or at the inflection points of the signal.

4. Method according to claim 2 or 3,
characterized in that
the rise in the actuation voltage for the piezotranslators of the third group, which move the two clamping devices towards and away from each other during the transport step, is interrupted if the output signal from the detector has passed through a predetermined number of peaks or inflection points counted from the beginning of the movement.

5. Method according to one out of claims 1 to 4,
characterized in that
the chronological sequence of the transport steps is synchronized with the line return of the image scanning or recording device.

6. Method according to claim 5,
characterized in that
the signals for the actuation of the clamping devices, for the beginning of the transport step, and for the line return are derived from a common base signal for the dotwise image recording or scanning.

7. Apparatus for performing the method according to one out of claims 1 to 6 having a frame (1, 1a) to which are attached two clamping devices (11, 21; 12, 22) each with a group of one or more piezotranslators, the clamping devices being linked together through a third group (13, 23) of piezotranslators that determine their spacing from each other,
characterized in that
it has an interferometer assembly consisting of
- an optical interferometer (14, 15, 16; 24, 25, 26),
- a monochromatic coherent light source (17, 27) and
- a photoelectric detector
which is arranged in such a way that its output signal is an unambiguous function of the distance of the clamping devices from each other.

8. Apparatus according to claim 7,
characterized in that
one clamping device (11, 21) is linked fast with the frame (1, 1a) while the second (12, 22) can be moved relative to the frame (1, 1a) by means of the piezotranslators (13, 23) of the third group.

9. Apparatus according to claim 7 or 8,
characterized in that
the optical interferometer is a Michelson interferometer (14, 15, 16; 24, 25, 26).

10. Apparatus according to claim 9,
characterized in that
one end mirror (14, 24) of the Michelson interferometer (14, 15, 16; 24, 25, 26) is fastened on the second clamping device (12, 22) and the other (15, 25) on the frame (1, 1a).

11. Apparatus according to one out of claims 7 to 10,
characterized in that
an interferometer assembly is provided for each piezotranslator (13, 23) of the third group.

12. Apparatus according to one out of claims 7 to 11,
characterized in that
each of the two clamping devices (11, 21; 12; 22) is distributed in multiple installations over the width of the apparatus.

13. Apparatus according to claim 12,
characterized in that
each of the two clamping devices (11, 12; 21, 22) is present in two installations that grip the edges of the material (2) to be transported.

## Revendications

1. Procédé de transport pas à pas d'un matériau en forme de bande ou de feuille à travers un dispositif d'enregistrement ou d'exploration d'images, dans lequel le matériau est saisi alternativement par deux dispositifs de serrage présentant chacun un groupe composé d'un ou plusieurs translateurs piézoélectriques, et ces dispositifs de serrage sont déplacés au moyen d'un troisième groupe de translateurs piézoélectrique au même rythme alterné, afin de s'approcher et de s'éloigner, caractérisé en ce que la variation de l'écartement entre les deux des dispositifs de serrage l'un par rapport à l'autre, pour chaque pas de transport est mesurée en continu au moyen d'un agencement à interféromètre composé:
- d'un interféromètre optique,
- d'une source de lumière cohérente monochromatique, et
- d'un détecteur photoélectrique, et
le déplacement de transport est arrêté quand une longueur de pas prédéterminée a été atteinte.

2. Procédé selon la revendication 1, caractérisé en ce que on utilise comme interféromètre optique, un interféromètre Michelson.

3. Procédé selon la revendication 2, caractérisé en ce que le signal de sortie du détecteur passe par un générateur d'impulsions qui émet des impulsions de pointe aux valeurs extrêmes ou aux points d'inflexion du signal.

4. Procédé selon la revendication 2 ou 3, caractérisé en ce que la montée de la tension d'actionnement pour les translateurs piézoélectriques du troisième groupe au moyen desquels les deux dispositifs de serrage sont rapprochés ou éloignés l'un par rapport à l'autre, pendant le pas de transport, est interrompue, lorsque le signal de sortie du détecteur a traversé un nombre prédéterminé de valeurs extrêmes ou de points d'inflexion, comptés à partir du début du déplacement.

5. Procédé selon l'une des revendications 1 à 4, caractérisé en ce que la séquence temporelle des pas de transport est synchronisée avec le retour de ligne du dispositif d'exploration ou d'enregistrement d'image.

6. Procédé selon la revendication 5, caractérisé en ce que les signaux pour l'actionnement des dispositifs de serrage, pour le début du pas de transport et pour le retour de ligne sont dirigés à partir d'un signal de base commun pour l'enregistrement ou l'exploration par points de l'image.

7. Dispositif pour la mise en oeuvre du procédé selon l'une des revendications 1 à 6, muni d'un cadre (1, 1a) dans lequel sont disposés deux dispositifs de serrage (11, 21; 12, 22) comportant chacun un groupe composé de un ou plusieurs translateurs piézoélectriques, les dispositifs de serrage étant reliés l'un à l'autre via un troisième groupe (13, 23) de translateurs piézoélectriques qui déterminent leur écartement l'un par rapport à l'autre, caractérisé en ce qu'il comprend un agencement à interféromètre, composé:
- d'un interféromètre optique (14, 15, 16; 24, 25, 26),
- d'une source de lumière cohérente monochromatique (17, 27), et
- d'un détecteur photoélectrique (18, 28) qui est disposé de telle manière que son signal de sortie soit une fonction univoque de l'écartement des dispositifs de serrage l'un par rapport à l'autre.

8. Dispositif selon la revendication 7, caractérisé en ce que l'un des dispositifs de serrage (11, 21) est relié rigidement au cadre (1, 1a) tandis que le deuxième dispositif de serrage (12, 22) est susceptible d'être déplacé par rapport au cadre (1, 1a) par les translateurs piézoélectriques (13, 23) du troisième groupe.

9. Dispositif selon la revendication 7 ou 8, caractérisé en ce que l'interféromètre optique est un interféromètre Michelson (14, 15, 16; 24, 25, 26).

10. Dispositif selon la revendication 9, caractérisé en ce qu'un miroir d'extrémité (14, 24) de l'interféromètre Michelson (14, 15, 16; 24, 25, 26) est fixé au deuxième dispositif de serrage (12, 22), tandis que l'autre miroir est fixé au cadre (1, 1a).

11. Dispositif selon l'une des revendications 7 à 10, caractérisé en ce qu'un agencement à interféromètre est prévu pour chaque translateur piézoélectrique (13, 23) du troisième groupe.

12. Dispositif selon l'une des revendications 7 à 11, caractérisé en ce que chacun des deux dispositifs de serrage (11, 21; 12, 23) est disposé réparti selon une disposition multiple sur la largeur du dispositif.

13. Dispositif selon la revendication 12, caractérisé en ce que chacun des deux dispositifs de serrage (11, 21; 12, 22) est prévu selon deux modes de réalisation, qui saisissent les bords du matériau (2) à transporter.
